# FASCICULE DE BREVET EUROPEEN

(11) **EP 0 873 449 B1**
(45) Date de publication et mention de la délivrance du brevet: **17.05.2000**
(21) Numéro de dépôt: 97900220.1
(22) Date de dépôt: 02.01.1997
(51) Int. Cl.: E01B 11/52, B23K 23/00

(54) **MOULE DE SOUDURE ET DISPOSITIF DE PRECHAUFFAGE DESTINE A COOPERER AVEC CELUI-CI**
GIESSFORM ZUM SCHWEISSEN UND DAMIT KOOPERIERENDE VORHEIZVORRICHTUNG
WELDING MOLD AND PREHEATING DEVICE INTENDED TO COOPERATE WITH THE WELDING MOLD

(30) Priorité: 05.01.1996 FR 9600086
(43) Date de publication de la demande: 28.10.1998
(73) Titulaire: Railtech International, 59590 Raismes (FR)
(72) Inventeur: THURU, Jean-Jacques, F-59230 Saint-Amand-les-Eaux (FR)
(74) Mandataire: Schrimpf, Robert
(86) Numéro de dépôt international: FR9700002
(87) Numéro de publication internationale: WO9725479

(56) Documents cités:
- AT-B- 369 304
- AT-B- 373 187
- AU-B- 599 274
- CH-A- 223 040
- DE-C- 358 525
- FR-A- 1 146 153
- FR-A- 2 374 127
- FR-A- 2 396 620

## Description

La présente invention concerne un moule de soudure, destiné à l'aboutement de deux pièces métalliques, telles que des rails de chemin de fer, présentant un écartement mutuel déterminé de façon à définir un espace entre elles, ledit moule comportant plusieurs éléments en matériau réfractaire, propres à s'assembler mutuellement en s'emboîtant localement sur les deux pièces et en se complétant mutuellement de façon à délimiter avec elles, autour dudit espace, une empreinte de moulage apte à recevoir un métal d'apport en fusion.

Ce métal d'apport en fusion est généralement obtenu par réaction aluminothermique et on utilise de tels moules pour assurer la soudure bout à bout de pièces métalliques diverses, généralement des profilés de section constante ou approximativement constante, à savoir non seulement des rails de chemin de fer mais également des fers à béton, des poutrelles métalliques, etc...

L'expérience de ce mode de soudure démontre qu'il est important, pour la qualité de la soudure, que l'espace intercalaire entre les abouts des pièces à souder présente une dimension déterminée avec certaines tolérances. Si l'espace intercalaire est trop large, le volume de métal d'apport est insuffisant pour le combler intégralement mais on constate visuellement ce défaut dès l'ouverture du moule, si bien que l'on sait que l'on doit recommencer la soudure ; si, par contre, l'espace intercalaire est trop étroit, le défaut n'est pas visible et n'apparaît qu'ultérieurement, après mise en service de la voie ferrée ou autre, sous forme d'une avarie qu'il faut réparer en urgence.

En outre, les moules de soudure actuellement offerts sur le marché, notamment pour la soudure aluminothermique des rails, peuvent être placés dans une position mal centrée par rapport à l'intercalaire, ce qui fait que le préchauffage éventuel des abouts de rails ou autres pièces métalliques puis leur chauffage par le métal d'apport s'effectuent dans des conditions différentes, nuisant à l'homogénéité de la soudure.

Pour éviter un tel défaut de centrage d'un moule de soudure du type indiqué en préambule, on a proposé, dans FR-A-2 374 127 qui sert de base au préambule de la revendication 1, qu'au moins l'un desdits éléments comporte, à l'intérieur de l'empreinte, au moins un organe de calage conformé et dimensionné de telle sorte qu'il puisse s'engager dans ledit espace si les deux pièces présentent un écartement mutuel au moins égal audit écartement mutuel déterminé, afin de permettre l'emboîtement dudit élément sur les deux pièces dans une position relative déterminée et l'assemblage mutuel desdits éléments et qu'il ne puisse s'engager dans ledit espace si les deux pièces présentent un écartement mutuel inférieur audit écartement mutuel déterminé, afin d'interdire l'emboîtement dudit élément sur les deux pièces dans ladite position relative déterminée en l'assemblage mutuel desdits éléments.

En ce qui concerne la nature des organes de calage, FR-A-2 374 127 préconise une nature fusible susceptible de s'incorporer au bain de métal d'apport en fusion qui enveloppe la saillie qu'ils forment à l'intérieur de l'empreinte de moulage, entre les pièces métalliques telles que des rails de chemin de fer, soit pour compléter la masse de ce bain si on les choisit de même constitution, soit pour compléter sa composition si on les choisit de constitution appropriée.

Cette fusion puis cette incorporation des organes de calage au bain de métal d'apport en fusion lors de la coulée de celui-ci dans l'empreinte de moulage nuisent nécessairement à la qualité de la soudure puisque laprésence des organes de calage, encore à l'état solide, au début de la coulée du métal d'apport en fusion gêne la répartition de celui-ci dans l'empreinte et, en particulier, nuit à la qualité des échanges thermiques entre celui-ci et les pièces à souder, et que l'incorporation du matériau constitutif de ces organes de calage, après leur fusion, au bain de métal d'apport en fusion ne peut s'effectuer de façon véritablement homogène.

Le but de la présente invention est de remédier à ces inconvénients et, à cet effet, la présente invention propose un moule du type indiqué en préambule et dans lequel, en outre, au moins l'un desdits éléments du moule comporte, à l'intérieur de l'empreinte, au moins un organe de calage conformé et dimensionné de telle sorte qu'il puisse s'engager dans ledit espace si les deux pièces présentent un écartement mutuel au moins légal audit écartement mutuel déterminé, afin de permettre l'emboîtement dudit élément sur les deux pièces dans une position relative déterminée et l'assemblage mutuel desdits éléments du moule, et qu'il ne puisse s'engager dans ledit espace si les deux pièces présentent un écartement mutuel inférieur audit écartement mutuel déterminé, afin d'interdire l'emboîtement dudit élément sur les deux pièces dans ladite position relative déterminée et l'assemblage mutuel desdits éléments, comme le propose FR-A-2 374 127, ce moule étant caractérisé en ce que ledit organe de calage est réalisé en un matériau se dégradant, sans production de déchets susceptibles de nuire à la soudure, à une température déterminée inférieure à la température de fusion des pièces.

Un Homme du métier comprendra aisément que la présence de l'organe de calage lors de l'assemblage des éléments du moule autour des abouts des pièces métalliques à souder interdit l'assemblage si l'espace entre ces derniers présente une dimension insuffisante, c'est-à-dire lorsque le défaut de soudure résultant du fait que l'on n'a pas respecté l'écartement mutuel déterminé ne serait pas visible immédiatement à l'ouverture du moule, étant entendu qu'un excès d'écartement mutuel des abouts des pièces reste possible mais entraîne des conséquences moindres puisque le défaut est immédiatement visible et que l'on peut par conséquent y remédier immédiatement.

Dès lors que l'organe de calage peut pénétrer dans l'espace intercalaire entre les abouts des pièces à souder, et dès lors que l'écartement entre ces dernières respecte l'écartement mutuel déterminé correspondant à une soudure de bonne qualité, avec une tolérance admissible, non seulement l'organe de calage ne s'oppose pas à l'assemblage des parties du moule, mais il assure en outre, en s'engageant entre les abouts de pièces à souder, un centrage du moule assemblé en apportant ainsi la certitude de traiter identiquement les deux abouts lors du préchauffage éventuel puis lors de la soudure, c'est-à-dire d'assurer l'homogénéité de celle-ci.

Naturellement, en fonction de la forme des pièces à assembler, on peut choisir la forme de l'organe de calage de telle sorte que celui-ci assure au mieux ses fonctions, et notamment la fonction de centrage. Ainsi, lorsque les pièces à assembler sont des rails de chemin de fer, on peut avantageusement prévoir que l'organe de calage pénètre dans l'espace intercalaire entre les rails au niveau de l'âme de ces derniers, par un positionnement approprié dans la partie correspondante de l'empreinte du moule, et épouse cet espace intercalaire sur une proportion importante de son étendue entre le niveau du patin des rails et celui du champignon de ces derniers, ce qui assure un positionnement précis du moule non seulement en centrage mais également en orientation par rapport aux rails, naturellement dès lors que cet espace intercalaire est juste suffisant pour permettre la pénétration de l'organe de centrage, ce qui correspond au respect de l'écartement mutuel déterminé entre les abouts de rails.

De préférence, la température déterminée de dégradation de l'organe de calage est inférieure à une température déterminée de préchauffage des pièces, à l'intérieur de l'empreinte préalablement à l'introduction du métal d'apport en fusion dans celle-ci. Ainsi, lorsqu'il y a préchauffage des abouts des pièces à assembler préalablement à l'introduction du métal d'apport entre eux, c'est lors de ce préchauffage que l'on fait disparaître l'organe de calage, dont les déchets sont évacués hors de l'empreinte avec les gaz chauds dégagés par le préchauffage. On évite ainsi que ces déchets entrent au contact du métal d'apport en fusion lors de l'introduction de celui-ci dans l'empreinte de moulage, et risquent de porter atteinte à la qualité de la soudure.

A titre d'exemple non limitatif de matériau thermodégradable susceptible de donner satisfaction, pour la réalisation de l'organe de calage, on peut citer le polystyrène expansé.

Lorsque, comme c'est notamment le cas des moules destinés à la soudure de rails de chemin de fer, les éléments du moule comportent deux coquilles latérales mutuellement symétriques par rapport à un plan de jonction mutuelle propre à coïncider avec un plan moyen commun aux deux pièces dans ladite position relative déterminée, on prévoit avantageusement que chacune de ces coquilles latérales présente un exemplaire de l'organe de calage, ce qui d'une part renforce l'effet d'obstacle à l'assemblage des éléments du moule si l'espace intercalaire entre les abouts des pièces à souder est insuffisant, et d'autre part améliore la précision du positionnement du moule par rapport aux pièces.

Lorsque les éléments du moule se répartissent en au moins un élément supérieur, qui peut être formé des deux coquilles latérales précitées, et un élément inférieur sous-jacent à l'élément supérieur au nombre d'au moins un, notamment une sole, il est possible de mal positionner cet élément inférieur par rapport à l'élément supérieur, même si ce dernier est correctement placé par rapport à l'espace intercalaire, ce qui risque d'entraîner des fuites de métal d'apport en fusion. Pour éviter cet inconvénient, on prévoit avantageusement, selon un mode préféré de mise en oeuvre de la présente invention, que l'élément supérieur et l'élément inférieur présentent des moyens d'emboîtement mutuel dans une position relative déterminée, par exemple sous la forme, aisément concevable par un Homme du métier, de creux et de reliefs présentant des formes et positions telles qu'ils coopèrent à cet effet.

De façon traditionnelle, le moule selon l'invention présente généralement un godet de coulée débouchant vers le haut à l'extérieur du moule et vers le bas dans l'empreinte, pour servir à l'introduction du métal d'apport en fusion dans celle-ci. Lorsqu'on pratique un préchauffage des abouts de pièces à souder préalablement à cette introduction de métal d'apport, ce préchauffage s'effectue au moyen d'un dispositif, par exemple un brûleur ou chalumeau de préchauffage, que l'on introduit de haut en bas dans le godet de coulée après assemblage du moule, et dont il est important qu'il soit placé de façon à peu près identique par rapport aux deux abouts de pièces à souder afin d'effectuer le préchauffage de ces abouts dans des conditions sensiblement identiques et connues, nécessaires à l'obtention d'une liaison homogène avec le métal d'apport.

Pour assurer un positionnement aussi précis que possible du dispositif de préchauffage par rapport aux abouts des deux pièces à souder, à l'intérieur de l'empreinte, préalablement à l'introduction du métal d'apport en fusion dans celle-ci, on prévoit avantageusement que le moule comporte des moyens de positionnement déterminé du dispositif de préchauffage. Dans la mesure où les dispositions caractéristiques précédemment décrites du moule selon l'invention assurent un positionnement précis de celui-ci par rapport aux abouts des pièces à souder, le positionnement précis, ainsi assuré, du dispositif de préchauffage par rapport au moule permet de positionner avec précision le dispositif de préchauffage par rapport aux pièces à souder, c'est-à-dire en pratique de le centrer par rapport à l'espace intercalaire entre ces dernières.

Ces moyens de positionnement du dispositif de préchauffage par rapport au moule peuvent être réalisés de différentes façons mais la mise en place du dispositif de préchauffage puis son démontage avant l'introduction du métal d'apport sont particulièrement simples si, de façon préférée, ces moyens de positionnements comportent, respectivement de part et d'autre du godet de coulée, à l'extérieur du moule, une portée d'emboîtement, de haut en bas, d'une portée respective aménagée complémentairement sur le dispositif de préchauffage.

En rappelant que ce dernier, lorsqu'il se présente sous la forme d'un brûleur ou chalumeau de préchauffage, est inévitablement muni d'un tube d'alimentation, généralement rigide et orienté à angle droit par rapport au brûleur, et que la présence de ce tube doit être compatible avec celle de divers matériels se trouvant à proximité immédiate du moule de soudure, on prévoit de préférence que, pour une même position du dispositif de préchauffage proprement dit par rapport à l'espace intercalaire entre les abouts de pièces à souder, on puisse l'emboîter sur le moule selon plusieurs orientations de son tube d'alimentation.

A cet effet, on prévoit avantageusement que les portées d'emboîtement aménagées respectivement de part et d'autre du godet de coulée soient identiques, mutuellement symétriques par rapport à un premier plan et respectivement symétriques par rapport à un deuxième plan perpendiculaire au premier plan, l'un des premier et deuxième plans étant propre à coïncider avec un plan moyen commun aux deux pièces dans ladite position relative déterminée et l'autre des premier et deuxième plans étant propre à coïncider avec un plan moyen dudit espace dans ladite position relative déterminée.

Les formes respectives des portées d'emboîtement peuvent être variées dès lors qu'elles sont compatibles avec le mode de fabrication du moule et avec les caractéristiques mécaniques de celui-ci.

Cependant, selon un mode de réalisation préféré, compatible même avec la réalisation d'un moule en sable aggloméré, chacune des portées d'emboîtement aménagées respectivement de part et d'autre du godet de coulée présente un fond plat tourné vers l'extérieur du moule et présentant la forme d'un trapèze isocèle se rétrécissant vers le bas, les deux fonds étant mutuellement parallèles et chevauchant le deuxième plan, et des épaulements bordant le fond vers le bas et dans le sens d'un éloignement par rapport au deuxième plan, respectivement de part et d'autre de celui-ci, alors que le fond est dégagé vers le haut.

Pour coopérer avec un moule comportant des portées d'emboîtement ainsi conformées, la présente invention propose un dispositif de préchauffage tel qu'un brûleur ou chalumeau de préchauffage, comportant un organe de chauffe, tel qu'une buse de sortie de gaz, destiné à être engagé de haut en bas dans le godet de coulée et à être placé à l'intersection des premier et deuxième plans, caractérisé en ce qu'il comporte deux plaques dont chacune présente une forme trapézoïdale sensiblement identique à celle du fond d'une portée d'emboîtement aménagée sur le moule, et des moyens pour placer les deux plaques respectivement de part et d'autre de l'organe de chauffe, dans une position relative telle qu'elles soient mutuellement parallèles, respectivement symétriques par rapport à un plan moyen de l'organe de chauffe, destiné à coïncider avec le deuxième plan, mutuellement symétriques par rapport à un autre plan moyen de l'organe de chauffe, destiné à coïncider avec le premier plan, et mutuellement espacées d'une dimension sensiblement identique à l'espacement mutuel des fonds des portées d'emboîtement aménagées sur le moule.

On est ainsi assuré d'obtenir, par emboîtement mutuel, un positionnement correct du dispositif de préchauffage en toute direction par rapport à l'empreinte du moule, c'est-à-dire par rapport aux abouts de pièces à souder.

Afin de faciliter la mise en place du dispositif de préchauffage sur le moule puis son enlèvement, on prévoit avantageusement que l'une des plaques soit solidaire de l'organe de chauffe, et serve ainsi de référence au montage sur le moule dès lors qu'elle est engagée dans l'une des portées d'emboîtement de celui-ci, et que l'autre plaque soit reliée à l'organe de chauffe par l'intermédiaire de moyens de réglage en écartement par rapport à la première plaque. Dans un tel cas, on met le dispositif de préchauffage en place sur le moule alors que la plaque réglable est écartée de la plaque fixe davantage que les fonds des portées d'emboîtement prévues sur le moule puis, après avoir calé la plaque fixe dans la portée d'emboîtement correspondante, on en rapproche la plaque réglable jusqu'à ce qu'elle vienne se placer dans l'autre portée d'emboîtement prévue sur le moule. Avant d'enlever du moule le dispositif de préchauffage, on peut à nouveau écarter la plaque réglable par rapport à la plaque fixe afin de faciliter cette opération.

D'autres caractéristiques et avantages d'un moule et d'un dispositif de préchauffage selon l'invention ressortiront de la description ci-dessous, relative à un exemple non limitatif, ainsi que des dessins annexés qui font partie intégrante de cette description.

Ces dessins sont tous relatifs à la soudure aluminothermique, bout à bout, de deux rails de chemin de fer mais un Homme du métier apportera aisément, aux dispositions qui vont être décrites, les modifications nécessaires à une adaptation au cas de la soudure des fers à béton, de profilés divers ou autres pièces métalliques à souder bout à bout par coulée de métal d'apport en fusion.
- La figure 1 montre une vue en perspective d'un demi-moule supérieur ou coquille d'un moule de soudure aluminothermique de deux rails de chemin de fer bout à bout, ce demi-moule supérieur étant muni d'un organe de calage conformément à la présente invention.
- La figure 2 montre une vue du moule assemblé autour des abouts de rails à souder, en coupe par un plan parallèle au plan de roulement des rails, au niveau de l'âme de ces derniers, chacun des deux demi-moules supérieurs étant muni d'un organe de calage conformément à la présente invention.

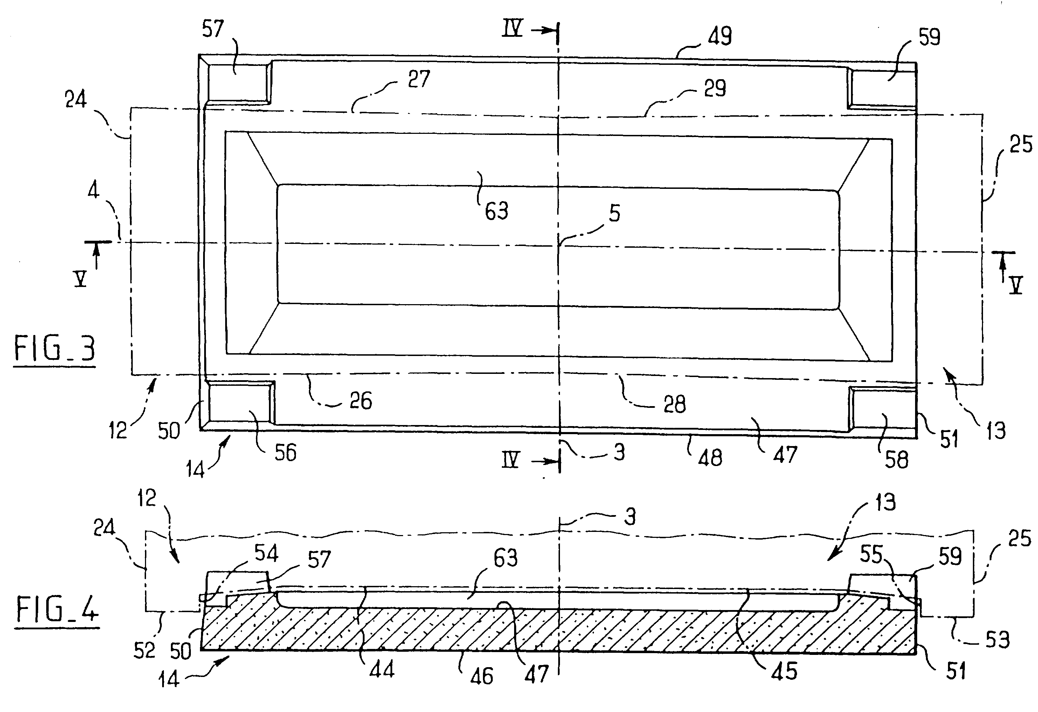

- La figure 3 montre une vue d'une partie inférieure de moule, ou sole, complétant les deux demi-moules supérieurs pour fermer le bas de l'empreinte de moulage autour des deux abouts de rails à souder.

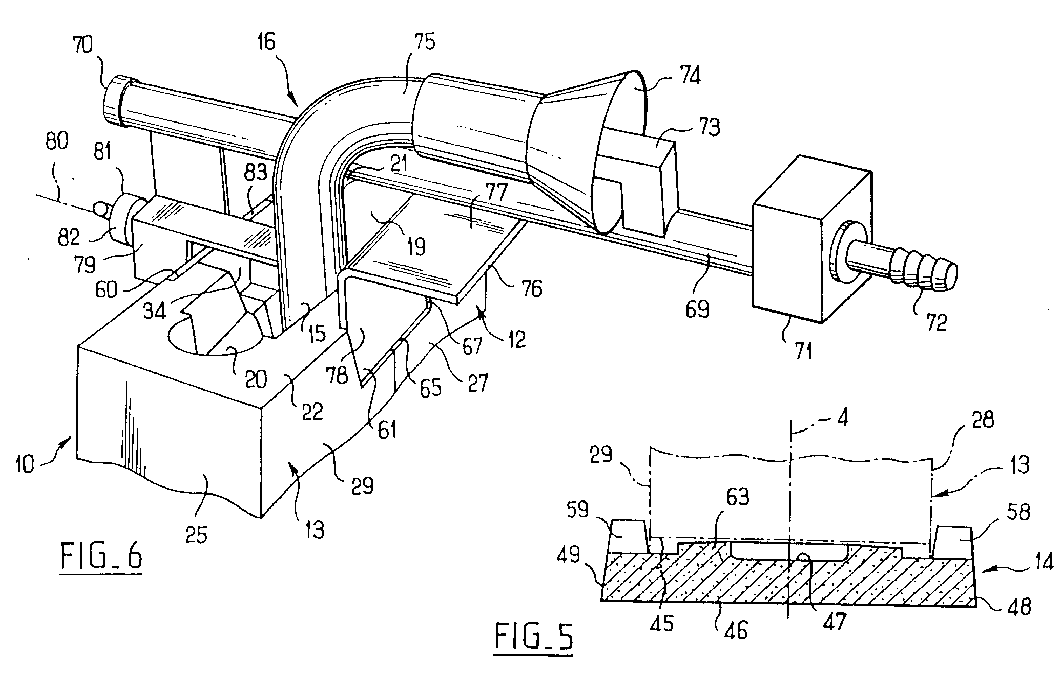

- Les figures 4 et 5 montrent une vue de cette partie inférieure de moule en coupe par deux plans mutuellement perpendiculaires, repérés respectivement en IV-IV et V-V à la figure 3.
- La figure 6 montre la coopération, conformément à un mode de mise en oeuvre préféré de la présente invention, entre un dispositif de préchauffage et la partie supérieure du moule, formée par les deux demi-moules, pour assurer un positionnement précis du dispositif de préchauffage par rapport aux abouts des deux rails à souder.

On a désigné respectivement par 1 et 2 deux rails de chemin de fer rectilignes ou pouvant être considérés localement comme tels, que l'on supposera horizontaux, pour des raisons de commodité de description et sans que l'on doive en déduire une quelconque limitation quant aux possibilités de mise en oeuvre de la présente invention. Ces deux rails sont placés dans le prolongement l'un de l'autre de telle sorte qu'ils présentent en commun un plan moyen de symétrie 3, que l'on supposera vertical, dans cet exemple non limitatif, et soient placés symétriquement l'un de l'autre par rapport à un autre plan moyen 4 que l'on supposera également vertical, coupant le plan 3 suivant un axe 5 vertical. Les deux rails 1 et 2 présentent ainsi des faces d'extrémité respectives 6, 7 ou abouts, planes, parallèles au plan 4, mutuellement symétriques par rapport à celui-ci et situées en regard l'une de l'autre de telle sorte que subsiste entre elles un espace 8 destiné à être empli d'un métal d'apport, obtenu par réaction aluminothermique, pour souder entre eux, bout à bout, les deux rails 1 et 2.

A cet effet, comme il est connu en soi, l'espace 8 ainsi que des zones respectives des rails 1 et 2 immédiatement adjacentes aux faces d'extrémité 6 et 7 de ces derniers sont logés à l'intérieur d'une empreinte 9 d'un moule 10 qui, dans l'exemple illustré, constitue une version perfectionnée, conformément à la présente invention, du moule commercialisé par la Demanderesse sous la dénomination "moule préfabriqué à joint sec", largement diffusé et décrit par exemple dans le brevet français N° 2 396 620. Ce moule est directement porté par les rails 1 et 2 dans une position d'utilisation conforme, avec certaines tolérances, à une position déterminée qui servira de référence pour la suite de la description. Naturellement, on pourrait perfectionner conformément à la présente invention tout autre moule de soudure de pièces métalliques, et un Homme du métier apportera sans difficulté toute modification nécessaire à cet effet aux dispositions qui vont être décrites.

Le moule 10 illustré étant bien connu dans ses caractéristiques générales, on rappellera simplement qu'il est formé de trois éléments principaux, à savoir deux demi-moules supérieurs, ou coquilles latérales, 12 et 13, symétriques l'un de l'autre par rapport au plan 3 le long duquel ils sont mutuellement jointifs, avec emboîtement mutuel (de façon non représentée), de façon à délimiter l'empreinte 9 respectivement de part et d'autre du plan 3 et vers le haut, et un élément inférieur ou plaque de fond, ou sole, 14 délimitant l'empreinte 9 vers le bas, les trois éléments 12, 13, 14 étant assemblés mutuellement par des moyens de serrage mutuel non représentés et étant étanchéifiés mutuellement, ainsi que vis-à-vis des rails 1 et 2, par des joints de feutre tels que 11 ainsi que par lutage.

Outre des moitiés respectives de l'empreinte 9, disposées symétriquement l'une de l'autre par rapport au plan 3 et suivant une symétrie respective par rapport au plan 4, les coquilles 12 et 13 délimitent vers le plan 3, au-dessus de l'empreinte 9, des moitiés respectives d'un godet de coulée 15 s'évasant vers le haut et débouchant vers le haut à l'extérieur du moule 10, lesquelles moitiés du godet de coulée 15 sont symétriques l'une de l'autre par rapport au plan 3 et respectivement symétriques par rapport au plan 4. Préalablement à la réalisation de la soudure, après mise en place du moule 10 sur les rails 1 et 2, le godet de coulée 15 reçoit un dispositif, à savoir dans cet exemple non limitatif un brûleur ou chalumeau 16, de préchauffage de l'empreinte 9 et des zones des rails 1 et 2 adjacentes à leurs faces d'extrémité respectives 6 et 7, après quoi il reçoit intérieurement une pièce emboîtée, non illustrée, symétrique par rapport aux deux plans 3 et 4 et formant une chicane obligeant ultérieurement le métal en fusion résultant de la réaction aluminothermique à s'écouler non pas directement suivant l'axe 5 vers l'empreinte 9, dans laquelle le godet de coulée 15 débouche vers le bas, mais par des zones latérales du godet de coulée 15, c'est-à-dire en pratique par les zones de ce godet de coulée 15 les plus éloignées du plan 3.

En outre, chaque coquille 12 et 13 délimite intérieurement, dans des zones plus éloignées du plan 3 que la moitié respectivement correspondante de l'empreinte 9 et du godet de coulée 15, une pipe respective 19, 20 de remontée d'air puis de métal au fur et à mesure du remplissage de l'empreinte 9 lors de la soudure aluminothermique, lesquelles pipes 19 et 20 débouchent d'une part vers le bas dans une zone inférieure de la moitié respective de l'empreinte 9, c'est-à-dire à proximité de la plaque de fond ou sole 14, et d'autre part vers le plan 3 dans une zone supérieure de la moitié respective de l'empreinte 9.

Comme il est également bien connu, les coquilles latérales 12 et 13, la plaque de fond ou sole 14 et la pièce formant chicane sont réalisées en un matériau présentant à la fois une tenue suffisante à l'échauffement résultant de la soudure et une facilité de destruction après la soudure, par exemple un sable aggloméré au silicate et durci au gaz carbonique.

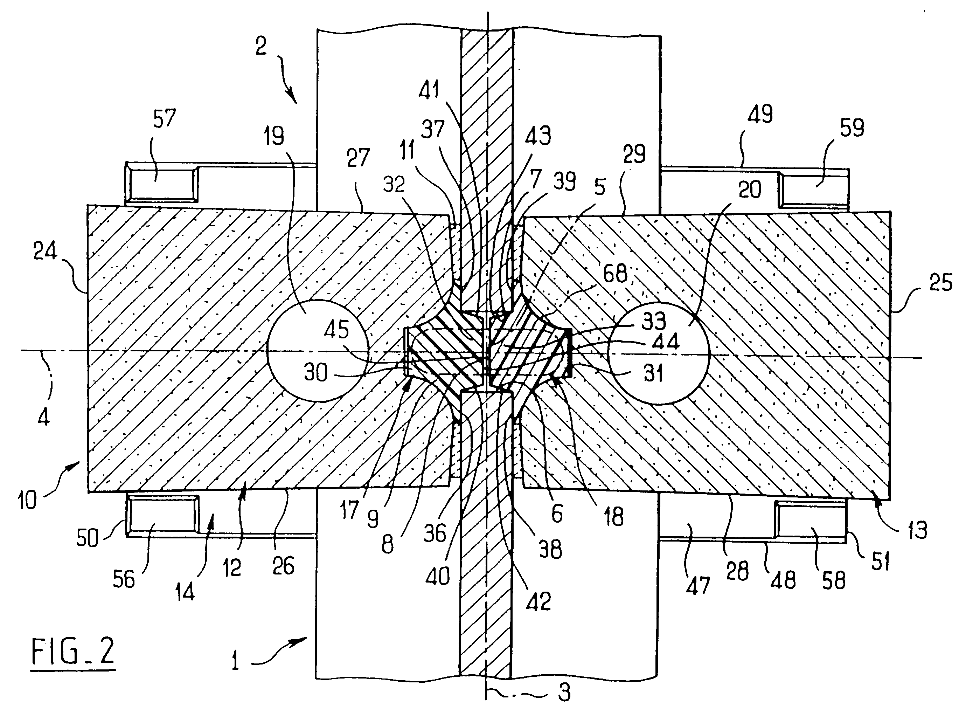

Vers le haut, les pipes 19 et 20 de même que les moitiés du godet de coulée 15 définies respectivement par la coquille latérale 12 et par la coquille latérale 13 débouchent dans une face supérieure, plane respective 21, 22 de celles-ci. Les faces 21 et 22 sont symétriques l'une de l'autre par rapport au plan 3 et perpendiculaires au plan 4 alors qu'elles forment par rapport au plan 3 un dièdre d'angle différent de 90°, pour des raisons de technologie de fabrication par moulage, mais suffisamment voisin de 90° pour que l'on puisse les considérer comme approximativement coplanaires. De même, alors que les deux coquilles 12 et 13 sont délimitées dans le sens d'un éloignement par rapport au plan 3 par des faces respectives 24, 25 planes, symétriques l'une de l'autre part rapport au plan 3 et parallèles à ce dernier, ces deux coquilles 12 et 13 sont délimitées dans le sens d'un éloignement par rapport au plan 4 par des faces respectives planes qui sont mutuellement symétriques par rapport au plan 4 et forment par rapport au plan 3 un angle différent de 90° mais suffisamment proche de 90° pour que l'on puisse les considérer comme mutuellement parallèles, comme le montre la figure 2 où l'on a désigné respectivement par 26 et 27 les faces délimitant la coquille 12 dans le sens d'un éloignement par rapport au plan 4, et par 28 et 29 les faces délimitant la coquille 13 dans le sens d'un éloignement par rapport au plan 4 ; les faces 26 et 28 peuvent ainsi être considérées comme approximativement coplanaires pour relier mutuellement les faces 24 et 25 d'un côté du plan 4 alors que les faces 27 et 29 peuvent être également considérées comme approximativement coplanaires pour relier mutuellement les faces 24 et 25 de l'autre côté du plan 4.

On remarquera que, sécantes vers le haut respectivement des faces 21 et 22 comme le sont également les faces 24 et 25, les faces 26 et 27 de la coquille 12 et les faces 28 et 29 de la coquille 14 peuvent avantageusement présenter à leur intersection respectivement avec la face 21 et avec la face 22, dans une zone respective adjacente au plan 3, une amorce de rupture non référencée permettant d'aménager un passage de corindon lors de l'installation du moule 10 sur les rails à souder 1, 2. Ainsi, par exemple, en utilisant les amorces de rupture correspondant aux faces 26 de la coquille 12 et 28 de la coquille 13, situées d'un même côté du plan 4, on peut effriter le matériau constitutif des coquilles 12 et 13 jusqu'au godet de coulée 15 pour former un passage de corindon 34 menant du godet de coulée 15, à un niveau inférieur à celui de la face supérieure 23 du moule 10, jusqu'à l'extérieur de ce moule de façon équitablement répartie de part et d'autre du plan 3, de telle sorte que le corindon puisse s'écouler, en fin de remplissage de l'empreinte 9 et du godet de coulée 15 par le métal résultant de la réaction aluminothermique, jusqu'à un bac, non illustré, de récupération de corindon posé sur le rail 1 (situé du même côté du plan 4 que les faces 26 et 28 des coquilles 12 et 13).

Toutes les dispositions qui viennent d'être décrites, à propos du moule 10, sont connues en elles-mêmes.

Le moule 10 présente en outre des aménagements conformes à la présente invention, lesquels vont être décrits à présent.

Afin d'empêcher que l'on puisse emboîter mutuellement les deux coquilles 12, 13 autour des rails 1, 2 et de l'espace 8 si celui-ci présente perpendiculairement au plan 4, entre les faces 6 et 7, une dimension inférieure à un seuil déterminé correspondant à une valeur optimale pour la soudure, chacune des coquilles 12, 13 est munie solidairement, à l'intérieur de la partie correspondante de l'empreinte 9, d'un organe de calage respectif 17, 18 conformé de façon à pouvoir s'engager dans l'espace 8, au niveau de l'âme des rails 1, 2, si la dimension en question de cet espace 8 atteint ou dépasse le seuil prédéterminé, et à ne pouvoir s'emboîter dans l'espace 8 si sa dimension en question est inférieure à ce seuil déterminé, en butant contre l'âme des rails 1, 2.

Chaque organe de calage 17, 18 est réalisé, avantageusement en une seule pièce, en un matériau tel que du polystyrène expansé, se détruisant sans produire de déchets susceptibles de nuire à la soudure lorsqu'il est porté à une température déterminée inférieure à la température de fusion des rails 1 et 2, et de préférence inférieure à la température déterminée de préchauffage éventuel de ces derniers préalablement à l'introduction du métal d'apport en fusion dans l'empreinte 9.

En vue de sa solidarisation avec la coquille correspondante 12, 13, chaque organe de calage 17, 18 présente une partie de base respective 30, 31 présentant une forme étroitement complémentaire de celle que la coquille correspondante 12, 13 présente vers le plan 3, dans ses zones les plus proches du plan 4, pour délimiter l'empreinte 9 au niveau de l'âme des rails 1, 2, cette forme pouvant varier dans une large mesure si bien qu'elle ne sera pas précisée davantage. De préférence, cette complémentarité de forme est propre à assurer une fixation de la partie de base 30, 31 à la coquille correspondante 12, 13, dans une position relative déterminée, par emboîtement en friction ou à force de la partie de base 30, 31 dans la coquille 12, 13. Dans cette position déterminée, qui servira de référence pour la suite de la description des organes de calage 17, 18, ces derniers sont respectivement symétriques par rapport au plan 4 et mutuellement symétriques par rapport au plan 3, si l'on suppose qu'un écartement égal au seuil d'écartement entre les faces 6 et 7 des rails 1 et 2 a été respecté, et a par conséquent permis d'assembler mutuellement les coquilles 12, 13 dans une position déterminée autour des rails 1 et 2 et de l'espace 8, comme on l'a illustré à la figure 2.

Si l'on se réfère à la position relative illustrée à la figure 2, chacune des parties de base 30, 31 présente vers le plan 3 deux épaulements plans 36, 37 et 38, 39, les deux épaulements 36 et 37 de la partie de base 30 de l'organe de calage 17 étant mutuellement coplanaires, mutuellement symétriques par rapport au plan 4 et parallèles au plan 3 de façon à prendre appui respectivement contre l'âme du rail 1 et contre l'âme du rail 2 au moins approximativement à plat du même côté du plan 3 que la coquille 12, et les deux épaulements 38, 39 de la partie de base 31 de l'organe de calage 18 étant coplanaires, mutuellement symétriques par rapport au plan 4 et parallèles au plan 3, et prenant appui respectivement contre l'âme du rail 1 et contre l'âme du rail 2 au moins approximativement à plat du même côté de ces derniers que la coquille 13, lorsque les deux coquilles 12 et 13 sont assemblées mutuellement.

En outre, chaque organe de calage 17, 18 porte, en saillie vers le plan 3 par rapport à ces deux épaulements 36, 37 et 38, 39, une partie de calage 32, 33 soigneusement calibrée de façon à ne s'insérer dans l'espace 8, jusqu'à ce que s'établisse le contact précité des épaulements 36, 37, 38, 39 avec l'âme de l'un, respectif, des rails 1, 2, qu'à la condition que l'espace 8 présente perpendiculairement au plan 4 une dimension au moins égale au seuil prédéterminé.

A cet effet, chaque partie de calage 32, 33 présente, lorsqu'elle est vue en coupe par un quelconque plan perpendiculaire à l'axe 5, une section identique, en forme de trapèze isocèle, définie par deux flancs plans respectifs 40, 41 et 42, 43, et par une face frontale plane respective 44, 45.

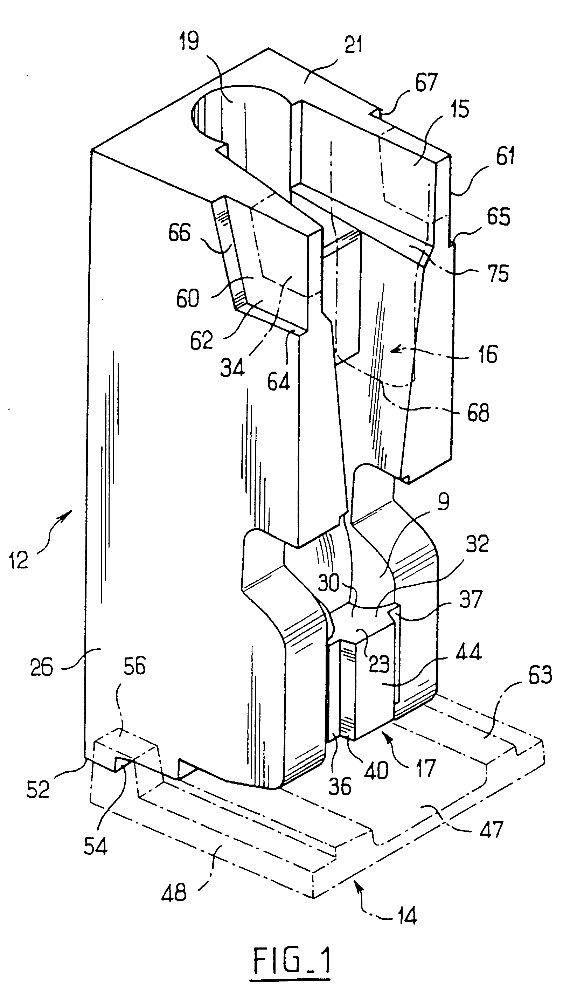

Comme le montre la figure 1 à propos de la face frontale 44, les deux faces frontales 44 et 45 sont rectangulaires, parallèles aux deux épaulements 36, 37 et 38, 39 de l'organe de calage respectif 17, 18 et en saillie vers le plan 3 par rapport à ces deux épaulements, cette saillie étant toutefois dimensionnée de telle sorte qu'il n'y ait pas contact entre les deux faces frontales 44 et 45 et que celles-ci, tout en étant proches du plan 3 auxquelles elles sont parallèles, restent situées du même côté de celui-ci que la coquille correspondante 12, 13.

Vers le haut et vers le bas, c'est-à-dire parallèlement à l'axe 5, cette forme rectangulaire est définie par jonction de la face frontale 44, 45 avec des faces respectivement supérieure et inférieure de l'organe de calage 17, 18 correspondant ; ces faces telles que 23 sont planes, perpendiculaires à l'axe 5 et délimitent l'ensemble des deux parties 30, 32, 31, 33 de l'organe de calage considéré 17, 18 respectivement vers le haut et vers le bas, y compris quant aux épaulements 36, 37, 38, 39 ; avantageusement, elles sont définies par tronçonnement transversal d'un profilé longitudinal, de section constante correspondant à la section de l'un ou l'autre des organes de calage 17, 18 par tout plan perpendiculaire à l'axe 5, ce qui autorise une fabrication particulièrement économique des organes de calage 17, 18.

Dans le sens d'un éloignement par rapport au plan 4, la face frontale 44 se raccorde d'un côté à l'épaulement 36, par le flanc 40, et de l'autre côté à l'épaulement 37, par le flanc 41, alors que la face frontale 45 se raccorde d'un côté à l'épaulement 38, par le flanc 42, et de l'autre côté à l'épaulement 39, par le flanc 43, les deux flancs 40 et 41 étant mutuellement symétriques par rapport au plan 4 de même que les deux flancs 42 et 43, qui sont respectivement symétriques des flancs 40 et 41 par rapport au plan 3. Le raccordement de la face frontale 44 aux deux flancs 40 et 41 s'effectue le long d'arêtes rectilignes non référencées, parallèles à l'axe 5, mutuellement symétriques par rapport au plan 4 et mutuellement espacées, perpendiculairement à celui-ci, d'une distance inférieure au seuil prédéterminé d'écartement entre les faces extrêmes 6, 7 correspondant à un optimum pour la soudure ; il en est de même du raccordement de la face frontale 45 aux deux flancs 42 et 43. Le raccordement des deux flancs 40 et 41 aux épaulement 36, 37, respectivement, s'effectue également le long d'arêtes rectilignes non référencées, parallèles à l'axe 5 et mutuellement symétriques par rapport au plan 4, l'espacement mutuel de ces deux arêtes perpendiculairement à ce plan 4 étant toutefois supérieur à celui des arêtes de raccordement des flancs 40 et 41 avec la face frontale 44, et plus précisément égal au seuil prédéterminé d'écartement entre les faces 6 et 7 si le matériau constituant l'organe de calage 17 est sensiblement incompressible et si le seuil en question est déterminé pratiquement sans tolérance ; il en est de même en ce qui concerne le raccordement des flancs 42 et 43 aux épaulements 38 et 39, respectivement, de l'organe de calage 18. Si, toutefois, le seuil d'écartement entre les faces extrêmes 6 et 7 des rails 1, 2, optimal pour la qualité de la soudure, est déterminé avec une certaine tolérance, on choisit plutôt de réaliser les organes de calage 17, 18 dans un matériau présentant une compressibilité limitée, ce qui est le cas du polystyrène expansé précité, et l'on donne aux faces frontales 44 et 45, entre leurs arêtes de raccordement aux flancs correspondants 40, 41, 42, 43 une dimension égale à la valeur limite inférieure du seuil, et à l'espacement mutuel des arêtes de raccordement des flancs 40, 41 avec les épaulements 36, 37 ou des flancs 42, 43 avec les épaulements 38, 39 une dimension égale à la valeur maximale admissible pour ce seuil ; ainsi, si ce seuil est de 25 plus ou moins 2mm, ce qui constitue un exemple non limitatif de valeur admissible dans le cas de la soudure aluminothermique de rails de chemin de fer, on donne aux faces frontales 44, 45, perpendiculairement au plan 4, une dimension de 23mm et les raccordements des flancs 40, 41 avec les épaulements 36, 37, de même que ceux des flancs 42, 43 avec les épaulements 38, 39, sont mutuellement espacés de 27mm perpendiculairement au plan 4 ; naturellement, ces chiffres sont indiqués à titre d'exemple non limitatif. De même, à titre d'exemple non limitatif, la dimension de chaque organe de calage 17, 18 entre ses faces supérieure et inférieure telles que 23 peut être de l'ordre de 50mm, étant entendu que ces chiffres concernent l'exemple de la soudure aluminothermique des rails de chemin de fer les plus fréquents, des chiffres différents pourraient être adoptés compte tenu de la nature et de la dimension des pièces métalliques à souder.

Un Homme du métier comprendra aisément que, dès lors que les faces extrêmes 6, 7 des rails 1, 2 respectent le seuil d'écartement correspondant à un optimum pour la soudure, les parties de calage 32, 33 des organes de calage 17, 18 peuvent s'insérer dans l'espace 8 et, à la fois :
- autoriser l'assemblage mutuel des coquilles 12, 13, dont la conformation est telle qu'elles viennent alors se rejoindre et buter mutuellement le long du plan 3, au-dessus des rails 1, 2, pour délimiter l'empreinte 9 autour de l'espace 8 et des zones des rails 1, 2 immédiatement voisines de leurs faces extrêmes 6, 7, et
- assurer le positionnement précis de ces coquilles 12, 13, notamment au niveau de la partie de l'empreinte 9 qu'elles définissent, par rapport à l'espace 8, à savoir un positionnement précis dans le sens de la longueur des rails, c'est-à-dire suivant une direction perpendiculaire au plan 4, et un positionnement précis en orientation, c'est-à-dire tel qu'un plan de symétrie, non référencé, propre à chacune d'elles coïncide avec le plan 4.

On est ainsi assuré non seulement de ce que les faces extrêmes 6, 7 des rails 1, 2 ne sont pas trop rapprochées pour la réalisation de la soudure, mais également de ce que le métal d'apport en fusion, versé ensuite dans l'empreinte 9 par l'intermédiaire du godet de coulée 15, entrera en contact avec les rails 2 et 3 dans des conditions identiques, notamment de surface de contact, et provoquera un chauffage localisé des rails 1, 2 dans des conditions identiques, ce qui est un gage d'homogénéité et par conséquent de qualité de la soudure.

Ceci constitue également un gage de sécurité puisque l'on est assuré de ce que les feutres tels que 11 destinés à réaliser l'étanchéité entre les coquilles 12, 13 et les rails 1, 2 ne chevauchent en aucune façon l'espace intercalaire 8, ce qui risquerait, indépendamment de toute question de qualité de la soudure, d'autoriser des fuites de métal d'apport en fusion hors de l'empreinte 9.

Egalement afin d'éviter de telles fuites, la sole 14, qui ferme l'empreinte 9 vers le bas, est de préférence emboîtée sous les coquilles 12, 13 par des moyens empêchant tout déplacement relatif suivant toute direction perpendiculaire à l'axe 5, c'est-à-dire horizontale si l'on se réfère à l'orientation choisie à titre d'exemple non limitatif pour la présente description, étant entendu que la solidarisation de la sole 14 et des deux coquilles 12, 13 s'effectue par des moyens extérieurs de serrage, non représentés.

On rappellera en premier lieu que les coquilles 12 et 13 n'épousent les deux rails 1 et 2 qu'autour du champignon, le long de l'âme, au-dessus du patin et sur le côté de celui-ci, et laissent par contre le patin totalement dégagé vers le bas. Ainsi, chaque coquille 12, 13 est délimitée vers le bas, entre l'empreinte 9 et la face 24, 23 qui la délimite dans le sens d'un éloignement par rapport au plan 3, par une face inférieure 44, 45 qui, à proximité immédiate de l'empreinte 9, est plane et perpendiculaire au plan 3 de façon à se placer dans le prolongement coplanaire de la face inférieure du patin des rails et, dans sa zone la plus éloignée de l'empreinte 9, s'incline vers le bas dans le sens d'un éloignement par rapport à l'axe 3, en restant plane, pour coopérer avec un joint en feutre, non illustré, porté par la sole 14. Celle-ci, quant à elle, présente la forme générale d'un parallélépipède rectangle, définie par une face inférieure plane, rectangulaire 46, perpendiculaire au plan 3, une face supérieure, plane, rectangulaire 47, également perpendiculaire au plan 3 et portant un rebord rectangulaire 63 de fixation du joint en feutre précité, non illustré, et quatre chants plans raccordant mutuellement les deux faces 46 et 47, à raison de deux chants 48, 49 perpendiculaires au plan 3 et mutuellement symétriques par rapport au plan 4 si l'on se réfère à un positionnement correct de la sole 14 par rapport aux coquilles 12, 13 elles-mêmes supposées positionnées correctement par rapport aux rails 1 et 2, ces deux chants 48 et 49 étant parallèles au plan 4 si l'on excepte une légère convergence vers le haut pour des raisons de technique de fabrication, et de deux chants 50, 51 perpendiculaires au plan 4 et, si l'on excepte une légère convergence vers le haut pour les mêmes raisons de fabrication, mutuellement symétriques par rapport au plan 3 et parallèles à celui-ci de façon approximative.

Pour assurer, conformément à un mode de mise en oeuvre préféré de la présente invention, un emboîtement des deux coquilles 12, 13 sur la sole 14, propre à assurer l'immobilisation relative précitée, les deux chants 50, 51 sont mutuellement espacés, perpendiculairement au plan 3, d'une distance inférieure à celle qui sépare perpendiculairement à ce plan les faces 24 et 25 des coquilles 12, 13 supposées assemblées, et chacune de ces coquilles présente, au raccordement de sa face inférieure 44, 45 avec sa face 24, 25 la plus éloignée du plan 3, un rebord 52, 53, en saillie vers le bas, définissant vers le plan 3 un épaulement respectif 54, 55 plan, au moins approximativement parallèle au plan 3 ; les deux épaulements 54, 55 sont mutuellement symétriques par rapport à celui-ci et mutuellement espacés, perpendiculairement à celui-ci, d'une distance sensiblement égale à celle qui sépare mutuellement, perpendiculairement à ce plan 3, les chants 50 et 51 au moins à proximité immédiate de leur raccordement avec la face supérieure 47 de la sole 14, de telle sorte que ces épaulements 54, 55 viennent se placer en regard des chants 50 et 51, respectivement, en respectant simplement un jeu fonctionnel vis-à-vis de ces derniers, lorsque les coquilles 12 et 13 reposent par leur face inférieure 44, 45 sur le joint de feutre porté par le rebord 63 de la face supérieure 47 de la sole 14, pour assurer une immobilisation à l'encontre de déplacements relatifs perpendiculairement au plan 3. Les chants 48, 49 de la sole 14 sont quant à eux espacés mutuellement, perpendiculairement au plan 4, d'une distance supérieure à celle qui sépare mutuellement, perpendiculairement à ce plan, les faces 26 et 27 de la coquille 12 à proximité immédiate de leur raccordement avec la face 24 et les faces 28 et 29 de la coquille 13 à proximité immédiate de leur raccordement avec la face 25 et la face supérieure 47 de la sole 14 présente de façon solidaire, en saillie vers le haut par rapport à elle à chacun de ses quatre coins, un plot respectif 56, 57, 58, 59 ; les deux plots 56 et 57 situés au raccordement du chant 50 avec les chants 48 et 49, respectivement, sont mutuellement symétriques par rapport au plan 4, de même que les plots 58 et 59 situés au raccordement du chant 51 avec les chants 48 et 49, respectivement, les plots 58 et 59 étant en outre symétriques des plots 56, 57, respectivement, par rapport au plan 3. Perpendiculairement à ce plan, les plots 58 et 59 sont espacés des plots 56 et 57 d'une distance largement supérieure à la dimension correspondante des patins des rails 1, 2 alors que, perpendiculairement au plan 4, les plots 56 et 58 sont espacés des plots 57 et 59, respectivement, d'une distance sensiblement égale à la dimension qui sépare, perpendiculairement au plan 4, les faces 26 et 27 de la coquille 12 à proximité immédiate de leur raccordement avec la face 24, et les faces 28 et 29 de la coquille 13 à proximité immédiate de leur raccordement avec la face 25. Ainsi, les deux coquilles 12 et 13 s'emboîtent entre les plots 56 et 58, d'une part, 57 et 59, d'autre part, moyennant respect d'un simple jeu fonctionnel, et cet emboîtement assure une immobilisation à l'encontre de mouvements relatifs perpendiculairement au plan 4, les faces 26 à 29 venant buter suivant cette direction contre les plots 56 à 59, respectivement.

On est ainsi assuré de ce que la sole 14 est correctement positionnée par rapport à l'empreinte 9 et, par conséquent, à l'espace 8 dès lors que les coquilles 12, 13 sont elles-mêmes correctement positionnées par rapport à celui-ci grâce aux organes de centrage 17 et 18.

On évite ainsi tout risque de mauvais positionnement de la sole 14, susceptible d'entraîner des fuites particulièrement dangereuses de métal d'apport en fusion.

On pourra remarquer que, pour assurer l'homogénéité de la soudure, non seulement il est nécessaire que le métal d'apport en fusion entre en contact, dans des conditions identiques, avec les deux rails 1, 2 à souder, mais également que, si l'on pratique un préchauffage de ces derniers, dans l'empreinte 9 du moule, avant d'y introduire le métal d'apport en fusion, mais il est en outre important que ce préchauffage s'effectue dans des conditions identiques pour les deux rails, c'est-à-dire que l'organe de chauffe du dispositif utilisé à cet effet, à savoir la buse 68 du brûleur 16 dans cet exemple, soit placé le plus rigoureusement possible symétriquement par rapport aux plans 3, 4, et en particulier suivant l'axe 5, et de préférence à un niveau déterminé au-dessus des rails 1, 2 lorsqu'il s'agit d'une buse de brûleur, tournée vers le bas.

A cet effet sont prévues, complémentairement sur le brûleur 16 et sur le moule 1, des dispositions dont un exemple non limitatif de réalisation va être décrit à présent, étant entendu que ces dispositions pourraient être transposées, y compris dans leurs variantes, à tout type de dispositif de préchauffage.

Dans le mode de réalisation préféré qui a été illustré, ces dispositions sont propres à permettre un emboîtement du brûleur sur le moule après assemblage de celui-ci autour des extrémités des rails 1, 2 à souder, un tel emboîtement étant particulièrement commode à réaliser, avec toute la précision requise quant au positionnement du brûleur à l'intérieur du godet de coulée, sans pour autant ralentir l'opération d'extraction du brûleur après préchauffage, c'est-à-dire la coulée du métal d'apport en fusion entre et autour des rails préchauffés.

A cet effet, le moule 10 présente extérieurement, respectivement de part et d'autre du godet de coulée 15, une portée d'emboîtement 60, 61 débouchant dans sa face supérieure, constituée par les faces supérieures 21 et 22 des coquilles 12, 13.

Chacune des portées 60, 61 est définie pour moitié par l'une des coquilles 12, 13, et chevauche symétriquement le plan 3, avec symétrie mutuelle des deux portées 60, 61 par rapport au plan 4.

Plus précisément, les deux portées 60, 61 présentent un fond plan respectif tel que 62, parallèle au plan 4 et aménagé, en retrait vers celui-ci, respectivement pour moitié dans chacune des faces 26 et 28 et pour moitié dans chacune des faces 27 et 29. Chacun de ces fonds tels que 62 est ainsi tourné vers l'extérieur du moule, dans le sens d'un éloignement par rapport au plan 4. Les deux fonds tels que 62 se raccordent vers le haut aux faces supérieures 21, 22 des coquilles 12, 13 et, si l'on assimile ce raccordement à une arête rectiligne en dépit d'un léger défaut de perpendicularité des faces supérieures 21 et 22 par rapport au plan 3, pour des raisons de techniques de fabrication par moulage comme on l'a indiqué précédemment, chacun de ces fonds 62 présente la forme d'un trapèze isocèle, se rétrécissant de haut en bas. Cette forme trapézoïdale est définie par raccordement du fond tel que 62 à trois épaulements plans, perpendiculaires au plan 4, à savoir un épaulement inférieur 64, 65 perpendiculaire au plan 3 et chevauchant symétriquement ce dernier, pour définir la petite base du trapèze isocèle dont la grande base est définie par le raccordement du fond tel que 62 avec les faces supérieures 21, 22 des coquilles 12, 13, et deux épaulements latéraux 66, 67 mutuellement symétriques par rapport au plan 3 et s'écartant progressivement de ce dernier vers le haut, chacun de ces épaulements latéraux 66, 67 se rattachant vers à bas à l'épaulement inférieur respectif 64, 65 et vers le haut à la face supérieure 21, 22 de l'une des coquilles 12, 13, respectivement correspondante. L'épaulement inférieur 64 et les épaulements de flancs 70 correspondant à la portée 60 débouchent par ailleurs dans les faces 26, 28, vers lesquelles la portée 60 est ainsi totalement dégagée de même qu'elle est totalement dégagée vers le haut, alors que l'épaulement inférieur 65 et les épaulements latéraux 67 débouchent par ailleurs dans les faces 27, 29 des coquilles 12, 13, si bien que la portée 61 est également totalement dégagée dans le sens d'un éloignement par rapport au plan 4, de même que vers le haut . En raison de l'identité des deux portées 60, 61, de leur symétrie respective par rapport au plan 3 et de leur symétrie mutuelle par rapport au plan 4, les épaulements inférieurs 64, 65 sont mutuellement coplanaires, et chaque épaulement latéral 67 est coplanaire d'un épaulement latéral 66 respectif.

On observera que les fonds tels que 62 des deux portées 60, 61 englobent totalement les amorces de rupture prévues pour l'aménagement d'un canal 34 d'évacuation du corindon, de telle sorte que, même si l'on a réalisé un tel canal, ce qui s'effectue avant la mise en place du brûleur de préchauffage, il subsiste entre ce canal 34 et les épaulements bordant le fond tel que 62 vers le bas et latéralement une bande de ce fond, tel que 62, suffisante pour offrir une contrepartie aux portées d'emboîtement solidaires du brûleur, lesquelles vont être décrites à présent en référence à la position qu'elles occupent lorsque le brûleur 16 est installé par leur moyen sur le moule 10. Cette position servira également de référence à la description schématique du brûleur 16 illustré, étant entendu qu'il existe de nombreux types de brûleurs utilisables pour le préchauffage des abouts de rails de chemin de fer à souder et qu'un Homme du métier comprendra aisément que, le cas échéant moyennant quelques modifications relevant de ses aptitudes normales, le montage qui va être décrit peut être adopté indépendamment du type de brûleur.

Dans l'exemple illustré, le brûleur 16 comporte un tube rectiligne 69 d'amenée de gaz, disposé horizontalement, perpendiculairement au plan 4, au-dessus de la face supérieure 21 de la coquille 12, étant bien entendu que l'identité et la symétrie mutuelle des portées 60, 61 autorisent également un montage dans lequel ce tube 69 serait disposé au-dessus de la face supérieure 22 de la coquille 13, de façon non illustrée. Le tube 69 présente deux extrémités ainsi disposées respectivement de part et d'autre du plan 4, à raison d'une extrémité obturée 70 disposée du même côté de ce plan que les faces 26 et 28 des coquilles 12, 13, et d'une extrémité 71 munie d'un raccord 72 d'arrivée de gaz, tournée du même côté que les faces 27 et 29 des coquilles 12, 13 par rapport au plan 4 et susceptible d'être tournée de l'autre côté de ce plan, si le tube 69 est placé au-dessus de la face supérieure 22 de la coquille 13 au lieu d'être placé au-dessus de la face supérieure 21 de la coquille 12.

De ce tube 69 dérive une buse 73 d'injection de gaz, débouchant dans le plan 3, vers le plan 4 et du même côté de celui-ci que l'extrémité 71 du tube 69, à l'intérieur d'un venturi 74 d'aspiration d'air ambiant. Ce venturi 74, présentant un axe perpendiculaire au plan 4 et situé dans le plan 3, est situé du même côté du plan 4 que l'extrémité 71 du tube 69 et se rétrécit vers le plan 4, jusqu'à son raccordement avec un tube 75 présentant, à son raccordement avec le venturi 74, un tronçon rectiligne, coaxial à celui-ci et à l'injecteur 73. Le tube 75, à partir de ce tronçon, est coudé à 90° vers le bas de façon à présenter un autre tronçon rectiligne d'axe 5, pénétrant vers le bas à l'intérieur du godet de coulée 15 et se terminant au-dessus de l'espace 8 par la buse 68, en passant à côté du tube 69 dont le tube 75 est rendu solidaire par tout moyen.

Du côté de son extrémité 71 par rapport au plan 4 et par rapport au tronçon du tube 75 qui est disposé suivant l'axe 5, le tube 69 porte de façon solidaire une plaque 76 coudée à angle droit de façon à présenter une première zone plane 77, perpendiculaire à l'axe 5 et servant à la fixation sous le tube 69, à un niveau supérieur à celui des faces supérieures 21 et 22 des coquilles 12, 13, et une deuxième zone 78 orientée parallèlement au plan 4, descendant à partir de la première zone 77 et présentant vers le bas une forme trapézoïdale sensiblement identique à celle du fond tel que 62 de l'une des portées d'emboîtement du moule, à savoir ici de la portée d'emboîtement 61 dans laquelle la zone 78 de la plaque 76 est engagée, en appui à plat vers le plan 4 contre le fond tel que 62, vers le bas contre l'épaulement 65 et dans le sens d'un éloignement par rapport au plan 3 sur les épaulements 67 ; ceci assure un calage de la plaque 76, par rapport au moule 10, vers le plan 4, vers le bas, et dans le sens d'un éloignement par rapport au plan 3 dans une position correspondant, pour la buse 68 et le tronçon du tube 75 qui s'engage dans le godet de coulée 15, à une coaxialité avec l'axe 5, à une symétrie par rapport aux deux plans 3 et 4 et à un niveau prédéterminé de la buse 68 par rapport aux rails 1 et 2 et à l'espace 8 délimité par les faces extrêmes 6, 7 de ceux-ci.

De l'autre côté du plan 4, à proximité immédiate de son autre extrémité 70, le tube 69 porte de façon solidaire un écrou 79 présentant un axe 80 perpendiculaire au plan 4, dans le plan 3, et situé à un niveau intermédiaire entre celui des épaulements inférieurs 64, 65 des portées 60, 61 et celui des faces supérieures 21, 22 des deux coquilles 12, 13 ; par exemple, l'axe 80 est situé à une même distance du plan géométrique non référencé, commun aux deux épaulements 64 et 65, et de l'intersection des faces supérieures 21 et 22 des coquilles 12, 13 avec le plan 4.

L'écrou 79 est placé en regard du fond tel que 62 de la portée 60 lorsque la partie 78 de la plaque 76 est engagée dans la portée 61 dans les conditions décrites précédemment, c'est-à-dire en appui à plat contre le fond tel que 62 de cette portée 61, contre son épaulement inférieur 65 et ses épaulements latéraux 67, et lorsque la buse 68 et le tronçon du tube 75 immédiatement adjacents à celle-ci sont disposés suivant l'axe 5 ; dans cette position, l'écrou 79 respecte un espacement vis-à-vis du fond tel que 62 de la portée 60 et, plus précisément, il est décalé par rapport aux faces 26 et 28 des coquilles 12 et 13 dans le sens d'un éloignement par rapport au plan 4 ; à cet effet, l'écrou 79 est écarté de la zone 78 de la plaque 76, perpendiculairement au plan 4, d'une distance supérieure à celle qui sépare les fonds tels que 62 des deux portées 60, 61, perpendiculairement à ce plan 4.

L'écrou 79 ainsi disposé porte intérieurement, coaxialement, une vis 81 comportant à cet effet une tige filetée d'axe 80, en prise avec le boulon 79, et une tête de manoeuvre 82 solidaire d'une extrémité de cette tige, du côté de l'écrou 79 opposé au plan 4 ; en agissant sur cette tête 82 à la rotation dans un sens ou dans l'autre par rapport à l'écrou 79, autour de l'axe 80, on peut visser ou dévisser la tige de la vis à l'intérieur de l'écrou 79. A l'opposé de la tête 82 par rapport à l'écrou 79, c'est-à-dire entre celui-ci et le plan 4, ou plus précisément la portée 60 dans l'exemple illustré, la tige de la vis 81 porte de façon solidaire en translation suivant l'axe 80 ainsi qu'à l'encontre de tout mouvement perpendiculaire à cet axe mais avec possibilité de rotation relative autour de celui-ci une plaque 83 parallèle au plan 4 et présentant une forme trapézoïdale symétrique par rapport au plan 3, identique à celle du fond tel que 62 de la portée 60.

Ainsi, en dévissant la vis 81 par rapport à l'écrou 79, on peut placer la plaque 83 à une distance de la zone 78 de la plaque 76 supérieure à la distance séparant mutuellement les fonds tels que 62 des deux portées 60 et 61, si bien que le brûleur 15 peut être levé librement par rapport au moule 10, si l'on suppose qu'initialement, la plaque 76 est en appui à plat, par sa zone 78, contre le fond tel que 62 de la portée 61 et les épaulements 65 et 67 de celle-ci ; on peut aussi amener ainsi librement le brûleur 15 dans sa position correspondant à un tel appui à plat. Lorsque cet appui est réalisé, on peut, en agissant sur la tête 82 de la vis 81, visser celle-ci dans l'écrou 79, ce qui se traduit par un rapprochement de la plaque 83 par rapport à la zone 78 de la plaque 76, suivant l'axe 80, jusqu'à ce que la plaque 83 vienne se loger dans la portée 60, et s'appuyer à plat contre le fond tel que 62 de celle-ci, d'une part, et contre les épaulements 64 et 66 bordant ce fond, d'autre part, dans une position rigoureusement symétrique de celle de la zone 78 de la plaque 76 par rapport au plan 4, ce qui immobilise le brûleur 16 dans une position dans laquelle sa buse 68 et le tronçon du tube 75 adjacent à cette buse sont disposés suivant l'axe 5, ce qui centre la buse 68 par rapport à l'espace 8 entre les faces extrêmes 6, 7 des deux rails 1, 2 à souder et place la buse 68 à un niveau parfaitement déterminé par rapport aux deux rails 1, 2 si bien que l'on peut pratiquer le préchauffage de ces derniers dans des conditions non seulement rigoureusement identiques, mais également rigoureusement déterminées. Une fois le préchauffage terminé, il est aisé de dévisser rapidement la vis 81, c'est-à-dire de desserrer le moule 10 entre la plaque 83 et la zone 78 de la plaque 76, pour ôter le brûleur 16 par levage avant de placer dans le godet de coulée la pièce précitée, formant chicane, et d'effectuer la coulée de métal d'apport en fusion dans le godet de coulée 15.

Un Homme du métier comprendra aisément que les dispositions qui viennent d'être décrites ne constituent qu'un exemple non limitatif de mise en oeuvre de la présente invention, et que l'on pourra prévoir de nombreuses modifications ou variantes sans sortir pour autant du cadre de la présente invention.

## Revendications

1. Moule de soudure, destiné à l'aboutement de deux pièces métalliques (1, 2), telles que des rails de chemin de fer, présentant un écartement mutuel déterminé de façon à définir un espace (8) entre elles, ledit moule (10) comportant plusieurs éléments (12, 13, 14) en matériau réfractaire, propres à s'assembler mutuellement en s'emboîtant localement sur les deux pièces (1, 2) et en se complétant mutuellement de façon à délimiter avec elles, autour dudit espace (8), une empreinte de moulage (9) apte à recevoir un métal d'apport en fusion, au moins l'un (12, 13) desdits éléments (12, 13, 14) comportant, à l'intérieur de l'empreinte (9), au moins un organe de calage (17, 18) conformé et dimensionné de telle sorte qu'il puisse s'engager dans ledit espace (8) si les deux pièces (1, 2) présentent un écartement mutuel au moins égal audit écartement mutuel déterminé, afin de permettre l'emboîtement dudit élément (12, 13) sur les deux pièces (1, 2) dans une position relative déterminée et l'assemblage mutuel desdits éléments (12, 13, 14), et qu'il ne puisse s'engager dans ledit espace (8) si les deux pièces (1, 2) présentent un écartement mutuel inférieur audit écartement mutuel déterminé, afin d'interdire l'emboîtement dudit élément (12, 13) sur les deux pièces (1, 2) dans ladite position relative déterminée et l'assemblage mutuel desdits éléments (12, 13, 14),
caractérisé en ce que ledit organe de calage (17, 18) est réalisé en un matériau se dégradant, sans production de déchets susceptibles de nuire à la soudure, à une température déterminée inférieure à la température de fusion des pièces (1, 2).

2. Moule selon la revendication 1, caractérisé en ce que ladite température déterminée de dégradation de l'organe de calage (17, 18) est inférieure à une température déterminée de préchauffage des pièces (1, 2), à l'intérieur de l'empreinte (9), préalablement à l'introduction du métal d'apport en fusion dans celle-ci.

3. Moule selon l'une quelconque des revendications 1 et 2, caractérisé en ce que lesdits éléments (12, 13, 14) comportent deux coquilles (12, 13) latérales mutuellement symétriques par rapport à un plan de jonction mutuelle (3) propre à coïncider avec un plan moyen (3) commun aux deux pièces (1, 2) dans ladite position relative déterminée et en ce que chacune de ces coquilles latérales (12, 13) présente un exemplaire (17, 18) de l'organe de calage.

4. Moule selon l'une quelconque des revendications 1 à 3, caractérisé en ce que lesdits éléments (12, 13, 14) comportent au moins un élément supérieur (12, 13), notamment formé de deux coquilles latérales (12, 13) mutuellement symétriques par rapport à un plan de jonction mutuelle (3) propre à coïncider avec un plan moyen (3) commun aux deux pièces (1, 2) dans ladite position relative déterminée, et un élément inférieur (14) sous-jacent à l'élément supérieur au nombre d'au moins un (12, 13), notamment une sole (14), et en ce que l'élément supérieur au nombre d'au moins un (12, 13) et l'élément inférieur présentent des moyens (52 à 59) d'emboîtement mutuel dans une position relative déterminée.

5. Moule selon l'une quelconque des revendications 1 à 4, caractérisé en ce qu'il présente un godet de coulée (15) débouchant vers le haut à l'extérieur du moule (10) et vers le bas dans l'empreinte (9) et des moyens (60, 61, 76 à 83) de positionnement déterminé, à l'intérieur du godet de coulée (15), d'un dispositif (16) de préchauffage des pièces (1, 2), à l'intérieur de l'empreinte (9), préalablement à l'introduction du métal d'apport en fusion dans celle-ci.

6. Moule selon la revendication 5, caractérisé en ce que les moyens de positionnement déterminé (60, 61, 76 à 83) comportent, respectivement de part et d'autre du godet de coulée (15), à l'extérieur du moule (10), une portée (60, 61) d'emboîtement, de haut en bas, d'une portée respective (78, 83) aménagée complémentairement sur le dispositif de préchauffage (16).

7. Moule selon la revendication 6, caractérisé en ce que les portées d'emboîtement (60, 61) aménagées respectivement de part et d'autre du godet de coulée (15) sont identiques, mutuellement symétriques par rapport à un premier plan (4) et respectivement symétriques par rapport à un deuxième plan (3) perpendiculaire au premier plan (4), l'un des premier et deuxième plans (3, 4) étant propre à coïncider avec un plan moyen commun (3) aux deux pièces (1, 2) dans ladite position relative déterminée et l'autre des premier et deuxième plans (3, 4) étant propre à coïncider avec un plan moyen (4) dudit espace dans ladite position relative déterminée.

8. Moule selon la revendication 7, caractérisé en ce que chacune des portées d'emboîtement (60, 61) aménagées respectivement de part et d'autre du godet de coulée (15) présente un fond plat (62) tourné vers l'extérieur du moule (10) et présentant la forme d'un trapèze isocèle se rétrécissant vers le bas, les deux fonds (62) étant mutuellement parallèles et chevauchant le deuxième plan (3), et des épaulements (64 à 67) bordant le fond (62) vers le bas et dans le sens d'un éloignement par rapport au deuxième plan (3), respectivement de part et d'autre de celui-ci, alors que le fond (62) est dégagé vers le haut.

9. Dispositif de préchauffage, tel qu'un brûleur ou chalumeau de préchauffage destiné à coopérer avec un moule de soudure selon la revendication 8, comportant un organe de chauffe, tel qu'une buse (68) de sortie de gaz, destiné à être engagé de haut en bas dans le godet de coulée (15) et à être placée à l'intersection (5) des premier et deuxième plans (3, 4), caractérisé en ce qu'il comporte deux plaques (78, 83) dont chacune présente une forme trapézoïdale sensiblement identique à celle du fond (62) d'une portée d'emboîtement (60, 61) aménagée sur le moule (10), et des moyens (79 à 82) pour placer les deux plaques (78, 83) respectivement de part et d'autre de l'organe de chauffe (68), dans une position relative telle qu'elles soient mutuellement parallèles, respectivement symétriques par rapport à un plan moyen (3) de l'organe de chauffe (68), destiné à coïncider avec le deuxième plan (3), mutuellement symétriques par rapport à un autre plan moyen (4) de l'organe de chauffe (68), destiné à coïncider avec le premier plan (4), et mutuellement espacées d'une dimension sensiblement identique à l'espacement mutuel des fonds (62) des portées d'emboîtement (60, 61) aménagées sur le moule (10).

10. Dispositif selon la revendication 9, caractérisé en ce que l'une des plaques (76, 83) est solidaire de l'organe de chauffe (68) et l'autre plaque (83) est reliée à l'organe de chauffe (68) par l'intermédiaire de moyens (79 à 82) de réglage en écartement par rapport à la première plaque (76).

## Patentansprüche

1. Schweißform, die zur Aneinanderfügung zweier Metallteile (1, 2) bestimmt ist, wie etwa Eisenbahnschienen, die einen gegenseitigen, bestimmten Abstand derart aufweisen, daß sie zwischeneinander einen Raum (8) festlegen, wobei die genannte Form (10) mehrere Elemente (12, 13, 14) aus feuerfestem Material aufweist, die dazu eingerichet sind, sich dadurch zusammenbauen zu lassen, daß sie sich örtlich auf den beiden Teilen (1, 2) aufstecken lassen und daß sie sich gegenseitig derart ergänzen, daß sie zusammen mit diesen um den genannten Raum (8) einen Formhohlraum (9) bilden, der dazu geeignet ist, ein herangeführtes, geschmolzenes Metall aufzunehmen, wobei mindestens eines (12, 13) der genannten Elemente (12, 13, 14) im Inneren des Formhohlraums (9) mindestens ein Positionierungsorgan (17, 18) aufweist, das derart ausgebildet und bemessen ist, daß es in den genannten Raum (8) eingreifen kann, wenn die beiden Teile (1, 2) einen gegenseitigen Abstand aufweisen, der mindestens gleich ist dem gegenseitigen, bestimmten Abstand, um das Aufstecken des genannten Elements (12, 13) auf den beiden Teilen (1, 2) in einer bestimmten Relativlage und den gegenseitigen Zusammenbau der genannten Elemente (12, 13, 14) zu gestatten, und daß es nicht in den genannten Raum (8) eingreifen kann, wenn die beiden Teile (1, 2) einen gegenseitigen Abstand aufweisen, der geringer ist als der gegenseitige, bestimmte Abstand, um das Aufstecken des genannten Elements (12, 13) auf den beiden Teilen (1, 2) in der genannten, bestimmten Relativlage und den gegenseitigen Zusammenbau der genannten Elemente (12, 13, 14) zu verbieten,
dadurch gekennzeichnet, daß das genannte Positionierungsorgan (17, 18) aus einem Material ausgeführt ist, das bei einer Temperatur, die niedriger ist als die Schmelztemperatur der Teile (1, 2), ohne die Erzeugung von Rückständen schwindet, die imstande wären, der Schweißung zu schaden.

2. Form nach Anspruch 1, dadurch gekennzeichnet, daß die genannte, bestimmte Schwundtemperatur des Positionierungsorgans (17, 18) niedriger ist als eine bestimmte Vorerwärmungstemperatur der Teile (1, 2) im Inneren des Formhohlraums (9) vor dem Einleiten des herangeführten, geschmolzenen Metalls in diesen.

3. Form nach irgendeinem der Ansprüche 1 und 2, dadurch gekennzeichnet, daß die genannten Elemente (12, 13, 14) zwei seitliche Kokillen (12, 13) aufweisen, die zueinander in Bezug auf eine Ebene (3) der gegenseitigen Verbindung symmetrisch sind, die dazu eingerichtet ist, mit einer den beiden Teilen (1, 2) gemeinsamen Mittelebene (3) in der genannten, bestimmten Relativlage zusammenzufallen, und daß jede dieser seitlichen Kokillen (12, 13) ein Exemplar (17, 18) des Positionierungsorgans aufweist.

4. Form nach irgendeinem der Ansprüche 1 bis 3, dadurch gekennzeichnet, daß die genannten Elemente (12, 13, 14) mindestens ein oberes Element (12, 13), das insbesondere aus zwei seitlichen Kokillen (12, 13) gebildet ist, die zueinander in Bezug auf eine Ebene (3) der gegenseitigen Verbindung symmetrisch sind, die dazu eingerichtet ist, mit einer den beiden Teilen (1, 2) gemeinsamen Mittelebene (3) in der bestimmten Relativlage zusammenzufallen, und ein unteres Element (14), insbesondere eine Sohle (14), aufweisen, das unter dem oberen Element (12, 13) und diesem benachbart angeordnet ist, dessen Zahl mindestens gleich eins ist, und daß das obere Element (12, 13), dessen Zahl mindestens gleich eins ist, und das untere Element Mittel (52 bis 59) zum gegenseitigen Zusammenstecken in einer bestimmten Relativlage aufweisen.

5. Form nach irgendeinem der Ansprüche 1 bis 4, dadurch gekennzeichnet, daß sie einen Lauf (15), der nach oben zur Außenseite der Form (10) und nach unten in den Formhohlraum (9) mündet, und im Inneren des Laufs (15) Mittel (60, 61, 76 bis 83) zur bestimmten Positionierung einer Vorrichtung (16) zur Vorerwärmung der Teile (1, 2) im Innenraum des Formhohlraums (9) vor dem Einleiten des herangeführten, geschmolzenen Metalls in diesen aufweist.

6. Form nach Anspruch 5, dadurch gekennzeichnet, daß die Mittel (60, 61, 76 bis 83) zur bestimmten Positionierung beiderseits des Laufs (15) auf der Außenseite der Form (10) einen Bereich (60, 61) zum Aufstecken eines jeweiligen Bereichs (78, 83) von oben nach unten aufweisen, der komplementär auf der Vorerwärmungsvorrichtung (16) eingebracht ist.

7. Form nach Anspruch 6, dadurch gekennzeichnet, daß die Aufsteckbereiche (60, 61), die beiderseits des Laufs (15) eingebracht sind, identisch sind, zueinander in Bezug auf eine erste Ebene (4) symmetrisch sind und jeweils in Bezug auf eine zweite Ebene (3) symmetrisch sind, die senkrecht zur ersten Ebene (4) verläuft, wobei eine von erster und zweiter Ebene (3, 4) dazu eingerichtet ist, mit einer den beiden Teilen (1, 2) in der genannten, bestimmten Relativlage gemeinsamen Mittelebene (3) zusammenzufallen, und die andere der ersten und zweiten Ebene (3, 4) dazu eingerichtet ist, mit einer Mittelebene (4) des genannten Raums in der genannten, bestimmten Relativlage zusammenzufallen.

8. Form nach Anspruch 7, dadurch gekennzeichnet, daß jeder der Aufsteckbereiche (60, 61), die beiderseits des Laufs (15) eingebracht sind, einen flachen Boden (62), der der Außenseite der Form (10) zugewandt ist und die Form eines gleichschenkligen Trapezes aufweist, das sich nach unten verengt, wobei die beiden Böden (62) zueinander parallel sind und die zweite Ebene (3) schneiden, sowie Schultern (64 bis 67) aufweist, die den Boden (62) nach unten hin und in Richtung einer Entfernung in Bezug auf die zweite Ebene (3) beiderseits dieser einfassen, während der Boden (62) nach oben freiliegt.

9. Vorerwärmungsvorrichtung, wie ein Brenner oder eine Brenneinrichtung zur Vorerwärmung, die dazu bestimmt ist, mit einer Schweißform nach Anspruch 8 zusammenzuwirken, mit einem Heizorgan wie einer Gas-Austrittsdüse (68), das dazu bestimmt ist, von oben nach unten in den Lauf (15) einzugreifen und am Schnitt (5) der ersten und zweiten Ebene (3, 4) angeordnet zu werden, dadurch gekennzeichnet, daß sie zwei Platten (78, 83), von denen eine jede eine trapezartige Form darbietet, die im wesentlichen mit der des Bodens (62) eines Aufsteckbereichs (60, 61) identisch ist, der auf der Form (10) eingebracht ist, und Mittel (79 bis 82) zum Aufsetzen der beiden Platten (78, 83) beiderseits des Heizorganes (68) in einer solchen Relativlage aufweist, daß sie zueinander parallel sind, jeweils in Bezug auf eine Mittelebene (3) des Heizorganes (68), die dazu bestimmt ist, mit der zweiten Ebene (3) zusammenzufallen, symmetrisch sind, zueinander in Bezug auf eine andere Mittelebene (4) des Heizorgans (68), die dazu bestimmt ist, mit der ersten Ebene (4) zusammenzufallen, symmetrisch sind und zueinander um ein Maß beabstandet sind, das im wesentlichen identisch mit der gegenseitigen Beabstandung der Böden (62) der Aufsetzbereiche (60, 61) ist, die auf der Form (10) eingebracht sind.

10. Vorrichtung nach Anspruch 9, dadurch gekennzeichnet, daß eine der Platten (76, 83) fest mit dem Heizorgan (68) verbunden ist, und daß die andere Platte (83) mit dem Heizorgan (68) unter Zwischenanordnung von Mitteln (79 bis 82) zum Einregulieren eines Abstands in Bezug auf die erste Platte (76) verbunden ist.

## Claims

1. Welding mould for butt welding two metal parts (1, 2) such as railway rails having a specific mutual separation in order to define a gap (8) between them, said mould (10) comprising a plurality of refractory material components (12, 13, 14) adapted to be assembled together by locally nesting over the two parts (1, 2) and complementing each other so as to delimit with them, around said space (8), a moulding imprint (9) adapted to receive a molten filler metal, at least one (12, 13) of said components (12, 13, 14) including, inside the imprint (9), at least one spacer member (17, 18) shaped and sized so that it can be engaged in said gap (8) if the two parts (1, 2) have a mutual separation at least equal to said specific mutual separation, in order to enable nesting of said component (12, 13) over the two parts (1, 2) in a specific relative position and the mutual assembly of said components (12, 13, 14) and such that it cannot be engaged in said gap (8) if the two parts (1, 2) have a mutual separation less than said specific mutual separation, in order to prohibit the nesting of said component (12, 13) over the two parts (1, 2) in said specific relative position and the mutual assembly of said components (12, 13, 14), characterized in that said spacer member (17, 18) is made from a material that degrades without producing residues likely to degrade the weld at a specific temperature lower than the melting point of the parts (1, 2).

2. Mould according to claim 1 characterized in that said specific temperature at which the spacer member (17, 18) is degraded is less than a specific temperature to which the parts (1, 2) are pre-heated inside the imprint (9) prior to introduction of the molten filler metal into the latter.

3. Mould according to claim 1 or claim 2 characterized in that said components (12, 13, 14) include two lateral shells (12, 13) mutually symmetrical about a mutual mating plane (3) adapted to coincide with a median plane (3) common to the two parts (1, 2) in said specific relative position and in that each of the lateral shells (12, 13) has one such spacer member (17, 18).

4. Mould according to any one of claims 1 to 3 characterized in that said components (12, 13, 14) include at least one top member (12, 13), for example formed of two lateral shells (12, 13) mutually symmetrical about a mutual mating plane (3) adapted to coincide with a median plane (3) common to the two parts (1, 2) in said specific relative position, and at least one bottom component (14) underlying the top component (12, 13), for example a baseplate (14), and in that the at least one top component (12, 13) and the bottom component have means (52 through 59) for mutual nesting in a specific relative position.

5. Mould according to any one of claims 1 to 4 characterized in that is has a pouring bush (15) opening at the top onto the outside of the mould (10) and at the bottom into the imprint (9) and means (60, 61, 76 through 83) for specifically positioning within the pouring bush (15) a device (16) for pre-heating the parts (1, 2) inside the imprint (9) prior to the introduction of the molten filler metal into the latter.

6. Mould according to claim 5 characterized in that the specific positioning means (60, 61, 76 through 83) comprise, on respective opposite sides of the pouring bush (15), externally of the mould (10), a bearing surface (60, 61) with which a respective bearing surface (78, 83) of complementary shape on the pre-heater device (16) nests downwardly.

7. Mould according to claim 6 characterized in that the nesting bearing surfaces (60, 61) on respective opposite sides of the pouring bush (15) are identical, mutually symmetrical about a first plane (4) and respectively symmetrical about a second plane (3) perpendicular to the first plane (4), one of the first and second planes (3, 4) being adapted to coincide with a median plane (3) common to the two parts (1, 2) in said specific relative position and the other of the first and second planes (3, 4) being adapted to coincide with a median plane (4) of said gap in said specific relative position.

8. Mould according to claim 7 characterized in that each of the nesting bearing surfaces (60, 61) on respective opposite sides of the pouring bush (15) has a flat back (62) facing towards the outside of the mould (10) and in the shape of an isosceles trapezium smaller at the bottom than at the top, the two backs (62) being mutually parallel and overlapping the second plane (3), and shoulders (64 through 67) flanking the back (62) downwards and in the direction away from the second plane (3), on respective opposite sides of the latter, whereas the back (62) is open in the upwards direction.

9. Pre-heater device, such as a pre-heater burner or torch adapted to cooperate with a welding mould according to claim 8, including a heater member, such as a gas outlet nozzle (68), adapted to be engaged downwardly in the pouring bush (15) and to be placed at the intersection (5) of the first and second planes (3, 4), characterized in that it includes two plates (78, 83) each of which has a trapezoidal shape substantially identical to that of the back (62) of a nesting bearing surface (60, 61) formed on the mould (10), and means (79 through 82) for placing the two plates (78, 83) on respective opposite sides of the heater member (68), in a relative position such that they are mutually parallel, respectively symmetrical about a median plane (3) of the heater member (68) adapted to coincide with the second plane (3), mutually symmetrical about another median plane (4) of the heater member (68) adapted to coincide with the first plane (4), and mutually spaced by a distance substantially identical to the mutual spacing of the backs (62) of the nesting bearing surfaces (60, 61) formed on the mould (10).

10. Device according to claim 9 characterized in that one of the plates (76, 83) is fastened to the heater member (68) and the other plate (83) is joined to the heater member (68) by means (79 through 82) for adjusting its separation from the first plate (76).
